(19) Europäisches Patentamt
European Patent Office
Office européen des brevets

(11) Numéro de publication: **0 124 487**
**A2**

# (12) DEMANDE DE BREVET EUROPEEN

(21) Numéro de dépôt: **84830049.7**

(22) Date de dépôt: **29.02.84**

(51) Int. Cl.³: **A 21 C 3/04**

(30) Priorité: **04.03.83 IT 935683**

(43) Date de publication de la demande: **07.11.84**
**Bulletin 84/45**

(84) Etats contractants désignés: **AT BE CH DE FR GB LI LU NL SE**

(71) Demandeur: **GHIOTT DOLCIARIA di G. Turacchi & C. S.a.S., Via Chiantigiana, 3, I-50028 Tavarnelle V. Pesa (Firenze) (IT)**

(72) Inventeur: **Turacchi, Graziano, via Chiantigiana 3, I-50028 Tavarnelle V. Pesa Firenze (IT)**

(74) Mandataire: **Martini, Lazzaro, Ufficio Brevetti Ing. Lazzaro Martini Via Brunelleschi, 1, I-50123 Firenze (IT)**

## (54) Extrudeuse à bandes pour pâte à biscuits et pâtisserie en général.

(57) Pour obtenir plusieurs bandes sans fin de pâte à biscuits et pâtisserie de ce genre, on fait tomber la pâte pétrie entre les branches 31 verticales, opposées et à une brève distance entre elles, de deux bandes 3 fermées à anneau et roulant en sens contraire: lesdites branches 31 avançant concordement vers le bas forcent la pâte pétrie à travers plusieurs matrices 9 inférieures à fente; un ou plusieurs transporteurs à bande horizontale situés ci-dessous pourvoient au recueil et transfert des bandes sans fin de pâte à biscuits à la phase successive de travail.

8
2
30
2
5
3
31
31
3
6
6
7
5
2
2
91
1
9

EP 0 124 487 A2

TITRE MODIFIÉ
voir page de garde

0124487

"Extrudeur à bandes pour pétrissage à biscuits et patisserie en général"

L'invention concerne un extrudeur, à bandes pour pétrissage à biscuits et pâtisserie en général.

On sait que le travail de la pâte à biscuits et autre pâtisserie prévoit une phase où la pâte pétrie doit etre réduite en une ou plusieurs bandes, façonnées ou non, sans fin. Dans ce but aujourd'hui on utilise les laminoirs à cylindres, mais la nature du matérial travaillé et la vitesse des cylindres roulants opposés sont telles que la pâte pétrie reste partiellement adhérente aux planches en regorgeant de sorte qu'elle, autre que ne pas avancer, empêche et entrave le travail de la pâte pétrie qui suit. On connait aussi les extrudeurs à piston, mais leur production est discontinue et relativement basse.

Le but principal de l'invention est d'obvier à ces inconvénients et en même temps de proposer une machine apte à etre ensérée dans une ligne continue de production.

On est parvenu à tel résultat en conformité à la présente invention en adoptant l'idée de faire tomber la pâte pétrie entre deux bandes verticales rapprochées, dont l'avancement concorde force la pâte pétrie à travers plusieurs matrices inférieures à fente alignées horizontalement entre elles.

00124487

Les avantages obtenus grâce à l'invention consistent essentiellement dans le fait que le matériel suit une trajectoire verticale; que le matériel est entièrement obligé à traverser les matrices; que la largeur élevée des bandes permet le travail d'une grande quantité de pâte;que l'épaisseur du matériel en travail est réglable par rapport à la nature de la pâte pétrie et au format qu'on veut obtenir; que la production horaire est très elevée et de loin supérieure à celle obtenue par les extrudeurs qu'on connait aujourdu'hui; que le fonctionnement ne présente pas d'inconvénients même pendant longues périodes de temps.

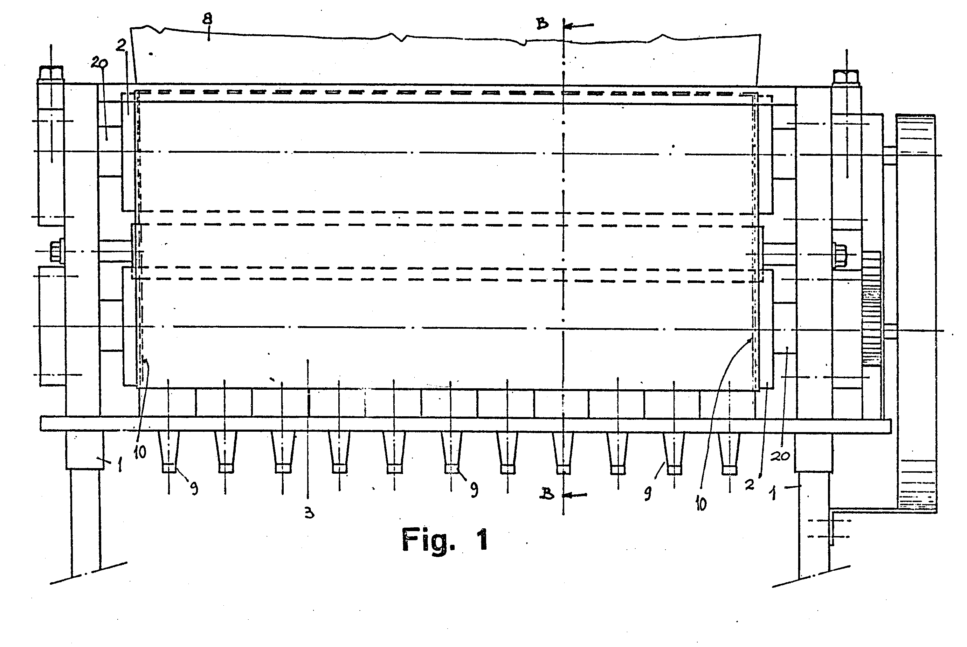

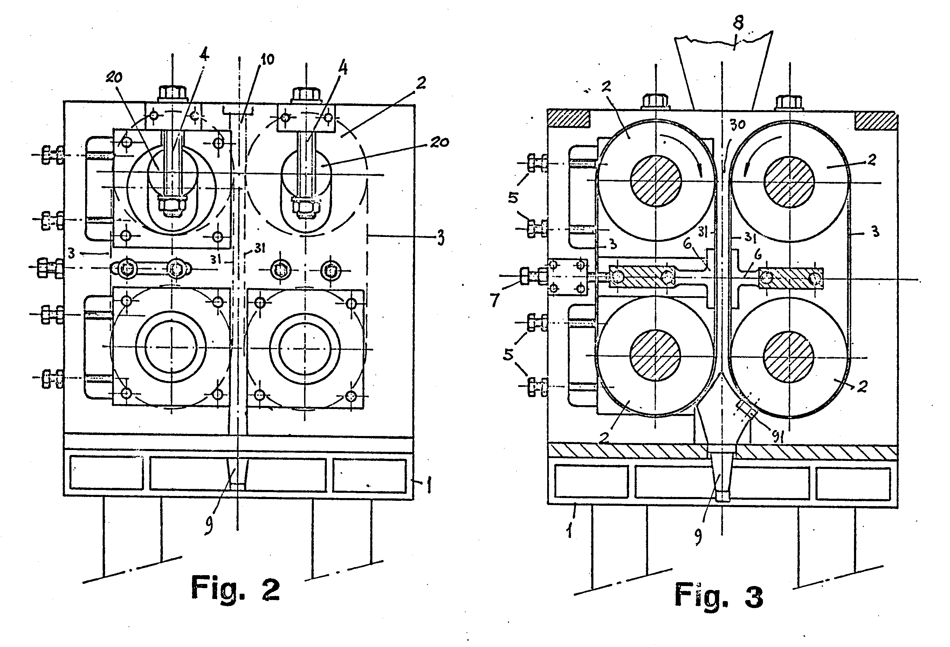

En ce qui suit l'invention serà exposée plus en detail à l'aide de dessins représentant seulement un mode d'exécution.La Fig. 1 représente la vue de face d'un extrudeur à bandes pour pétrissage à biscuits et pâtisserie en général suivant l'invention; la Fig. 2 représente la vue de côté gauche de la machine de Fig. 1; la Fig. 3 représente la section suivant BB de Fig. 1.

Réduit à sa structure essentielle et avec référence aux dessins annexés un extruder pour pétrissage à biscuits et pâtisserie en général suivant l'invention est composé:

- d'un bâti 1 avec deux pieds-droits verticaux dans lesquels sont installés roulants, les arbres 20 de quatre cylindres 2 horizontaux, alignés deux à deux verticalement et horizontalement;
- de deux bandes 3 fermées à anneau sur les deux couples de cylindres 2 alignés verticalement, rou-

00124487

lant en sense contraire et mis en tension par deux tendeurs à vis 4 agissant sur chacun des arbres supérieurs 20: la distance ou lumière 30 entre les branches 31 verticales opposées des bandes 3 est réglée au moyen de deux tendeurs a vis 5 agissant sur chaque extrémité des deux arbres 20 d'un des couples de cylindres 20 alignés verticalement (celui à gauche dans la Fig. 2) et le sens de rotation des bandes 3 est tel que les dites branches 31 opposées se meuvent concordement vers le bas; en correspondance de deux extrémités des bandes 3 un diaphgrame vertical 10 est prévu pour délimiter et fermer latéralement la lumière 30;

- de deux traverses 6 horizontales à l'intérieur des anneaux 3 pour soutenir les branches 31 des bandes 3, une de ces traverse étant à course horizontale réglable au moyen de deux tendeurs 7 d'extrémité a vis;

- d'une trémie supérieure 8 pour l'alimentation de la pâte pétrie dont la sortie inférieure est en correspondance du sommet des branches 31 des bandes 3 et en axe à la lumière 30 entre les dites branches 31;

- d'une série de matrices 9 à profil actif conique et fente à lumière de forme variabile par rapport au format des bandes, lesquelles matrices sont alignées horizontalement en axe à la dite lumière 30 des bandes 3 et avec l'embouchure à distance minimum de la base des branches 31 des bandes et entre les branches 31 des bandes 3: les dites matrices 9 sont interchangeables, coulissantes horizontalement pour résulter en axe à la lumière 30 et en outre pourvues d'une râclette 91 mise avant la bande 3 qui est en position fixe.

Une band de transport au-dessous de la sortie des dites matrices 9 - pour simplification non représentée dans le dessin - pourvoit au recueil des bandes de pâte qui sortent des matrices 9 et à leur envoi vers la phase successive de travail.

# REVENDICATIONS

1) Un extrudeur pour pétrissage à biscuits et pâtisserie en général caractérisé par le fait qu'il comprend deux bandes 3 fermées à anneau avec une branche verticale 31 opposée et à mouvement concorde vers le bas, lesquelles forcent la matériel, introduit au moyen d'une trémie supérieure 8, dans la lumière 30 des dites branches 31, à travers plusieurs matrices inférieures 9 à fente.

2) Un extrudeur pour pétrissage à biscuits et pâtisserie en général suivant la revendication 1) caractérisé par le fait que les dites bandes 3 sont supportées par deux couples de cylindres 2 horizontaux, verticalement alignés, dont les arbres 20 sont installés dans deux pieds-droits verticaux d'un bati 1 et au moins ceux inférieurs desquels cylindres 2 sont mis en rotation contraire par un meme mécanisme moteur.

3) Un extrudeur pour pétrissage à biscuits et pàtisserie en général suivant les revendications 1) et 2) caractérisé par le fait que l'arbre 20 supérieure de chaque couple de cylindres 2 est enregistrable verticalement au moyen de deux tendeurs à vis 2 d'extrémité, pour régler la tension des bandes 3.

4) Un extrudeur pour petrissage à biscuits et pâtisserie en général suivant les revendications de 1) à 3) caractérisé per le fait que chacun des arbres 20 d'un couple vertical de cylindres 2 est enregistrable horizontalement au moyen de deux tendeurs à vis 5 d'extrémité, pour régler la largeur de la lumière 30 entre les branches 31 des bandes 3.

5) Un extrudeur pour pétrissage à biscuits et pâtisserie en général suivant les revendications de 1) à 4) caractérisé per le fait qu'il comprend deux traverses 6 horizontales de support de branches 31 des bandes 3, au moins une desquelles traverses 6 est enregistrable horizontalement au moyen de deux tendeurs à vis 7 d'extrémité, par rapport à la position des arbres 20 des cylindres 2 correspondants.

6) Un extrudeur pour petrissage à biscuits et pâtisserie en général suivant la revendication 1) caractérisé par le fait que les dites matrices 9, lesquelles sont alignées horizontalement en axe à lumière 30 des bandes 3 et avec possibilité d'enregistrement horizontal, ont un profil actif conique, une fente à lumière variable avec le format désiré des bandes de pâte, et sont pourvues d'une raclette 91 et sont amovibles.

00124487

20
1
2
10
9
B
B
9
3
8
9
10
2
20
1

Fig. 1

2
3
8
30
31
6
9
91
1
5
7
4
20
10

Fig. 3

Fig. 2